# EUROPÄISCHE PATENTSCHRIFT

(11) **EP 0 995 045 B1**
(45) Veröffentlichungstag und Bekanntmachung des Hinweises auf die Patenterteilung: **29.10.2003**
(21) Anmeldenummer: 99934457.5
(22) Anmeldetag: 10.05.1999
(51) Int. Cl.: F16B 39/34

(54) **BEFESTIGUNGSSYSTEM MIT EINER TEILWEISE KUNSTSTOFFUMMANTELTEN SCHRAUBE**
FIXING SYSTEM COMPRISING A PLASTIC COVERED SCREW
SYSTEME DE FIXATION COMPRENANT UNE VIS POURVUE D'UN REVETEMENT EN MATIERE PLASTIQUE

(30) Priorität: 12.05.1998 DE 19821160
(43) Veröffentlichungstag der Anmeldung: 26.04.2000
(73) Patentinhaber: NACAM Deutschland GmbH, 49448 Lemförde (DE)
(72) Erfinder: SCHÄFER, Burkhard, D-27777 Ganderkesee (DE); KLUMPE, Stephan, D-49179 Ostercappeln (DE); RAUTERBERG, Thomas, D-28197 Bremen (DE); MICHALSKI, Herniu, D-28816 Brinkum (DE)
(86) Internationale Anmeldenummer: DE9901398
(87) Internationale Veröffentlichungsnummer: WO99058864

(56) Entgegenhaltungen:
- EP-A- 0 508 135
- DE-C- 4 015 772
- US-A- 3 568 746

## Beschreibung

Die Erfindung betrifft eine Vorrichtung zur Festlegung einer ersten Baugruppe an einem zweiten Bauteil zur Verwendung insbesondere in der Kraftfahrzeugindustrie, entsprechend den gattungsbildenden Merkmalen des Anspruches 1.

Aus der DE-GM 18 20 586 ist eine Halterung für eine Kopfschraube als Befestigungsschraube bekannt. Mittels dieser Befestigungsschraube ist ein Flansch an einem Bauteil befestigbar. In den Flansch ist wenigstens eine Bohrung mit einem Vormontagegewinde eingebracht. Die Befestigungsschraube hat zwischen Kopf und Gewindebereich einen Schaftbereich, wobei die Länge des Gewindebereiches zur Festlegung der Befestigungsschraube so bemessen ist, daß dieser das im Rahmen der Vormontage zu durchquerende Vormontagegewinde verläßt, bevor der Einschraubvorgang im Befestigungsgewinde beginnt. Der Gewindeinnendurchmesser der Befestigungsschraube entspricht dabei dem Außendurchmesser des Schaftbereiches, wodurch die Verliersicherung der Befestigungsschraube realisiert wird. Das bedeutet, die Befestigungsschraube wird bei einer Lösung nach der DE-GM 18 20 586 nur durch den geringen Gewindebereich in der Bohrung gehalten.

Aus der DE 30 27 417 A1 geht ferner eine Dehnschraube hervor, die zur Abdichtung eines Gewindeloches dient. Der Schaftbereich dieser Befestigungsschraube ist mit einer Umhüllung aus Elastomermaterial versehen, deren Außendurchmesser dem Gewindeaußendurchmesser entspricht. Es soll während des Einschraubens eine ausschließlich elastische, das heißt, reversible Verformung des Elastomermaterials stattfinden.

Vorrichtungen der eingangs genannten Art werden beispielsweise auch eingesetzt, um vormontierte Baugruppen wie Lenksäulenbaueinheiten oder dergleichen an der Karosserie eines Kraftfahrzeuges im Rahmen der Endmontage festzulegen. Hierbei werden bei der Vormontage einer Lenksäulenbaueinheit eine oder mehrere Befestigungsschrauben jeweils in ein vorzugsweise am Gehäuse der Lenksäulenbaueinheit befestigtes Vormontagegewinde eingeschraubt. Dies hat den Vorteil, daß bei der Endmontage der Lenksäulenbaueinheit an der Karosserie keine einzelnen Befestigungsbauelemente zusätzlich bereitgestellt werden müssen. Ist die Lenksäulenbaueinheit im Verlauf der Endmontage an der Karosserie in ihre endgültige Position gebracht, so werden die Befestigungsschrauben in ein zweites Befestigungsgewinde eingeschraubt. Dieses Befestigungsgewinde kann sich sowohl direkt an der Karosseriestruktur eines Kraftfahrzeuges oder aber ebenfalls in Verlängerung des Vormontagegewindes an dem Lenksäulengehäuse befinden. Im letztgenannten Fall wird die Lenksäulenbaueinheit durch eine zwischen Vormontagegewinde und Befestigungsgewinde angeordnete karosserieseitige Lasche geklemmt. Beide Gestaltungen der Befestigung machen es erforderlich, daß die Befestigungsschraube mit ihrem Gewinde entweder das Vormontagegewinde verlassen haben muß, bevor die Schraube mit ihren ersten Gewindegängen in das Befestigungsgewinde eintritt oder das Vormontagegewinde wird beim Eintritt der Befestigungsschraube in das Befestigungsgewinde überbrochen, daß heißt zerstört.

Beide beschriebenen Montagevarianten weisen im Hinblick auf einen möglichen Wiederausbau der Lenksäulenbaueinheit einen gravierenden Nachteil auf.
Bei der erstgenannten Variante, bei der die Befestigungsschraube vollständig aus dem Vormontagegewinde herausgetreten ist, ergibt sich die Schwierigkeit, daß ein Lösen der Befestigungsschraube zwangsläufig ein Zurückführen der Schraube in das erste Vormontagegewinde bedeutet. Diese Zurückführung ist bei der üblicherweise nur möglichen axialen Druckkrafteinleitung in Längsachse der Schraube sehr schwierig und unter normalen Demontagebedingungen nahezu gänzlich ausgeschlossen. Dies bedingt, daß der Ausbau der Lenksäule nur unter besonderen Schwierigkeiten möglich ist.
Bei der zweiten der oben beschriebenen Varianten ist das Vormontagegewinde nach dem Ersteinbau der Lenksäule bereits oftmals fast völlig zerstört. Dies bedeutet, daß nach einer Demontage der Lenksäule dieses Gewinde nachgeschnitten werden muß, da es nicht mehr nutzbar ist und die Lenksäule folglich in ihrer Montagefähigkeit eingeschränkt ist.

Aufgabe der vorliegenden Erfindung ist es daher, die oben beschriebenen Nachteile des Standes der Technik zu beseitigen und eine Vorrichtung bereitzustellen, welche eine problemlose Montage und Demontage eines Bauteils oder einer Baugruppe an einem zweiten Bauteil gewährleistet und sich gleichzeitig problemlos handhaben und kostengünstig herstellen läßt.

Diese Aufgabe wird erfindungsgemäß zusammen mit den gattungsbildenden Merkmalen mit der im kennzeichnenden Teil des Anspruchs 1 offenbarten technischen Lehre gelöst.

Dabei weist die Befestigungsschraube mindestens einen vorderen, am freien Schraubenschaftende angeordneten Gewindebereich und einen zweiten, dem Schraubenkopf benachbarten Bereich auf, wobei dieser mit einer Kunststoffummantelung versehen ist, in der ein sich erst bei Einschrauben der Befestigungsschraube in das Vormontagegewinde einarbeitendes, mit dem Vormontagegewinde korrespondierendes Gewinde vorhanden ist.

Diese spezielle konstruktive Gestaltung bewirkt, daß beim Ein- und Ausschraubvorgang der Befestigungsschraube diese mit ihrem vorderen Gewindeteil in dem korrespondierenden Befestigungsgewinde schraubbar ist, wobei gleichzeitig durch den kunststoffummantelten Bereich während des Einschraubvorganges zunächst eine Führung der Befestigungsschraube gegeben ist und gleichzeitig während des Anziehvorganges eine Überdrehung des in diesem kunststoffummantelten Bereich eingeprägten Gewindes möglich ist. Dieses Überdrehen verhindert eine Beschädigung des Vormontagegewindes an der ersten Baugruppe und ermöglicht ein problemloses Wiederentfernen der Befestigungsschraube aus dem Befestigungs- und dem Vormontagegewinde. Darüber hinaus bildet die Haftung zwischen Kunststoffummantelung und Vormontagegewinde nach Beendigung des Anziehvorganges der Befestigungsschraube eine zusätzliche Sicherung gegen unbeabsichtigtes Lösen der Befestigungsschraube. Ein weiterer Vorteil der erfindungsgemäßen Vorrichtung besteht darin, daß nach einem Demontagezyklus allein eine neue Befestigungsschraube für eine erneute Montage verwendet werden muß, was gegenüber dem Stand der Technik eine erhebliche Kosteneinsparung bedeutet.

Spezielle Ausgestaltungen des Gegenstandes der Erfindung ergeben sich aus den Merkmalen der Unteransprüche.

Es hat sich insbesondere als vorteilhaft erwiesen, die Kunststoffummantelung aus einem duktilen Kunststoffwerkstoff, vorzugsweise Polyethylen oder Polyurethan herzustellen. Diese Werkstoffe bieten die Gewähr, daß das sogenannte Überdrehmoment innerhalb des Vormontagegewindes beim Anziehvorgang der Befestigungsschraube in einem Bereich von 2 bis 6 Nm liegt und somit das eigentliche Anziehmoment nur äußerst geringfügig beeinflußt. Darüber hinaus bietet die spezielle Duktilität der Werkstoffe die Gewähr, daß das Kunststoffmaterial beim Überdrehen der Befestigungsschraube in den Gewindegängen des Vormontagegewindes ausweichen kann und somit nur minimale Materialabscherungen stattfinden.

Es hat sich darüber hinaus als zweckmäßig erwiesen, daß die Länge des ersten zur Festlegung dienenden Gewindebereiches der Befestigungsschraube so bemessen ist, daß dieser das im Rahmen der Vormontage zu durchquerende Vormontagegewinde verläßt, bevor der Einschraubvorgang im Befestigungsgewinde beginnt. Diese spezielle konstruktive Gestaltung erleichtert beim Einschraubvorgang der Befestigungsschraube das "Einfädeln" des vorderen Gewindebereiches in das Befestigungsgewinde.

Darüber hinaus ist es von Vorteil, im Bereich der Kunststoffummantelung radial zwischen Schraubenschaft und Kunststoffummantelung der Befestigungsschraube eine umlaufende Schraubenrändelung anzuordnen. Diese Schraubenrändelung erhöht die Haftkraft der Kunststoffummantelung an dem dafür vorgesehenen Schaftbereich der Befestigungsschraube. Dies ist insbesondere deshalb beachtlich, da die Befestigungsschrauben übli cherweise mit Hilfe von Druckluftschraubern angezogen werden, die mit hohen Drehzahlen und großen Drehmomenten arbeiten.

Im folgenden wird ein Ausführungsbeispiel des Gegenstandes der Erfindung anhand der beigefügten Zeichnungen näher erläutert. Es zeigen:
- Figur 1: eine Ausführungsform der erfindungsgemäßen Vorrichtung in Schnittdarstellung im vormontierten Zustand der Befestigungsschraube;
- Figur 2: die erfindungsgemäße Vorrichtung der Figur 1 in einem Zwischenstadium der Befestigung und
- Figur 3: die erfindungsgemäße Vorrichtung aus Figur 1 im endmontierten Zustand,
- Figur 4a: eine Befestigungsschraube der erfindungsgemäßen Vorrichtung in Seitenansicht,
- Figur 4b: einen Ausschnitt der Befestigungsschraube entsprechend Figur 4b entlang der Schnittlinie B/B in dieser Figur.

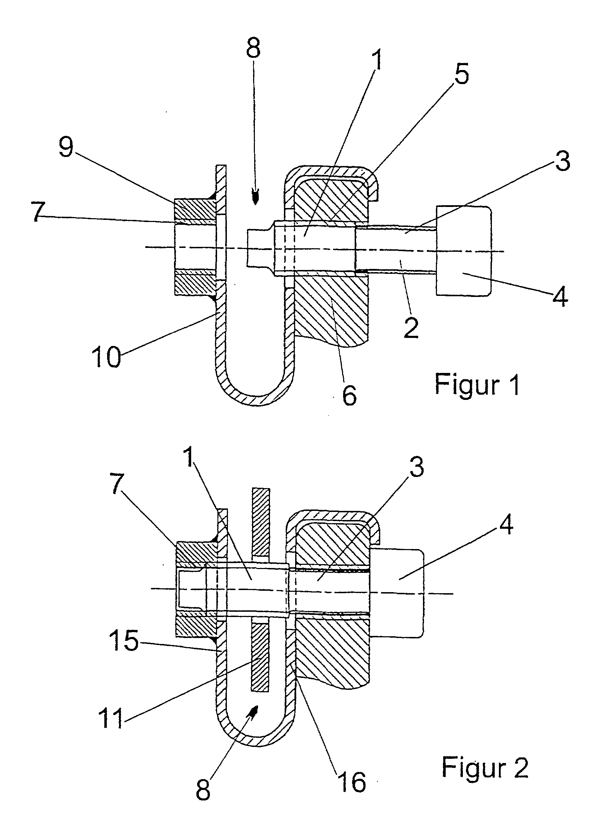

Die in den Figuren 1 - 3 dargestellte Vorrichtung weist eine Befestigungsschraube 3 auf, die mit einem ersten am vorderen freien Schaftende angeordneten Gewindebereich 1 versehen ist. Dem Gewindebereich 1 benachbart befindet sich ein kunststoffummantelter Schaftbereich 2, der sich vom Ende des Gewindebereiches 1 über den gesamten Schaft bis zum Schraubenkopf 4 der Befestigungsschraube 3 erstreckt. Zur Vorrichtung gehört darüber hinaus ein Vormontagegewinde 5, welches in einem Gehäusebauteil 6 einer zu montierenden Baugruppe wie beispielsweise einer Lenksäulenbaueinheit angeordnet ist. Darüber hinaus weist die Vorrichtung ein zweites Befestigungsgewinde 7 auf, welches axial in einer Flucht mit dem Vormontagegewinde 5 liegt und von diesem durch einen Zwischenspalt 8 getrennt ist. Das Befestigungsgewinde 7 befindet sich in einer Schweißmutter 9, die an einem U-förmigen Bügel 10 angeschweißt ist, der wiederum an dem oben erwähnten Gehäusebauteil 6 festgelegt ist. Der Vormontagezustand der Lenksäulenbaueinheit sieht vor, daß die Befestigungsschraube 3 mit ihrem Gewindebereich 1 in das Vor montagegewinde 5 des Gehäusebauteils 6 eingeschraubt ist, wie dies die Figur 1 zeigt. Im Rahmen der Endmontage der Lenksäulenbaueinheit innerhalb eines Kraftfahrzeuges wird die Lenksäulenbaueinheit in eine Position gebracht, in der eine karosserieseitige Lasche 11 in den Zwischenspalt 8 eingreift, der durch die beiden Schenkel 15 und 16 des U-förmigen Bügels 10 gebildet ist. Die Befestigungsschraube 3 wird im Rahmen der Endmontage durch eine Aussparung 12 in der Lasche 11 durchgeführt, wobei die Aussparung 12 beispielsweise die Form eines Schlitzes oder einer Bohrung haben kann.

In der Figur 2 ist ein Zwischenstadium dargestellt, bei der die Befestigungsschraube 3 mit ihrem Gewindebereich 1 in die ersten Gewindegänge des Befestigungsgewindes 7 eingeschraubt ist. Gleichzeitig wurde durch die Schraubbewegung der Befestigungsschraube 3 im Schaftbereich 2 in die dort vorhandene Kunststoffummantelung durch das Vormontagegewinde 5 ein Gewinde geschnitten, welches für die Befestigungsschraube eine Führungsfunktion übernimmt. Aus der Figur 2 ist ersichtlich, daß der Gewindebereich 1 in seiner Länge so bemessen ist, daß bei Anlage des Schraubenkopfes 4 am Gehäusebauteil 6 dieser Gewindebereich 1 aus dem Vormontagegewinde 5 freigekommen ist. Ein weiteres Anziehen der Befestigungsschraube 3 bewirkt zum einen eine Verkleinerung des Zwischenspaltes 8 durch die Bewegung der Schweißmutter 9 hin zum Schraubenkopf 4, darüber hinaus findet im Schaftbereich 2 ein Überdrehen des in die Kunststoffummantelung eingeprägten, beim Einschraubvorgang entstandenen Gewindes statt. Dieses Überdrehen wird durch die Duktilität des verwendeten Kunststoffes wie beispielsweise Polyethylen oder Polyurethan ermöglicht, der es erlaubt, daß das auf dem Schaftbereich 2 aufgebrachte Kunststoffmaterial in die vorhandenen Gewindegänge ausweicht. Je nach Materialbeschaffenheit des Kunststoffs kann das für das Ausweichen des Materials notwendige Drehmoment beeinflußt werden, wobei bei der Materialauswahl zuallererst ein möglichst kleines Drehmoment anzustreben ist, da hierdurch ein direkter Einfluß auf die Klemmkraft der Lasche 11 der Karosserie zwischen den beiden Schenkeln 15 und 16 des Gehäusebauteils 6 besteht.
Die Kunststoffummantelung ermöglicht es somit bei der Anlage des Schraubenkopfes 4 am Gehäusebauteil 6, daß die Befestigungsschraube ohne translatorische Bewegung weiter gedreht werden kann, während sich die Schweißmutter translatorisch auf dem ersten Gewindebereich 1 verschiebt.

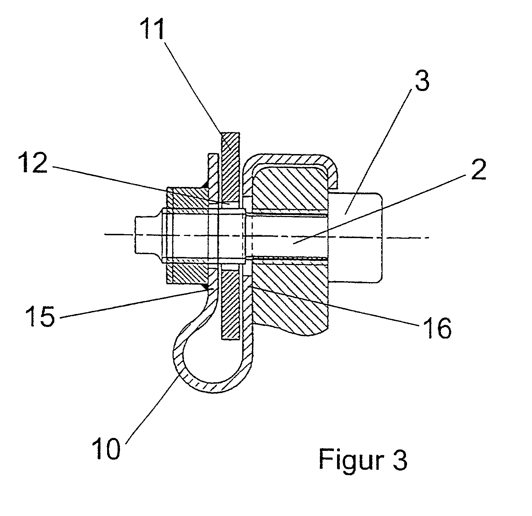

In der Figur 3 ist der Endmontagezustand der Vorrichtung dargestellt. Die Lasche 11 der Karosserie ist hierbei zwischen den Schenkeln 15 und 16 des Bügels 10 eingeklemmt, wobei sich der Bügel 10 entsprechend der Darstellung der Figur 3 verformt hat. In diesem Zustand der Vorrichtung bietet die Haftkraft der Kunststoffummantelung an dem Vormontagegewinde 5 eine zusätzliche Sicherheit gegen unbeabsichtigtes Lösen der Befestigungsschraube 3.

Bei einer Demontage der Lenksäulenbaueinheit ist die Kunststoffummantelung darüber hinaus in der Lage, der Befestigungsschraube 3 die nötige Führung beim Herausschrauben zu geben. Die dargestellte Vorrichtung ermöglicht somit eine einfache Montage und Demontage zu verbindender Bauelemente. Gegenüber dem Stand der Technik bleibt erfindungsgemäß das Vormontagegewinde 5 beim Montage- und Demontagevorgang unbeschädigt, allein die Befestigungsschraube 3 als preiswertes Bauteil ist nach einer Demontage auszutauschen.

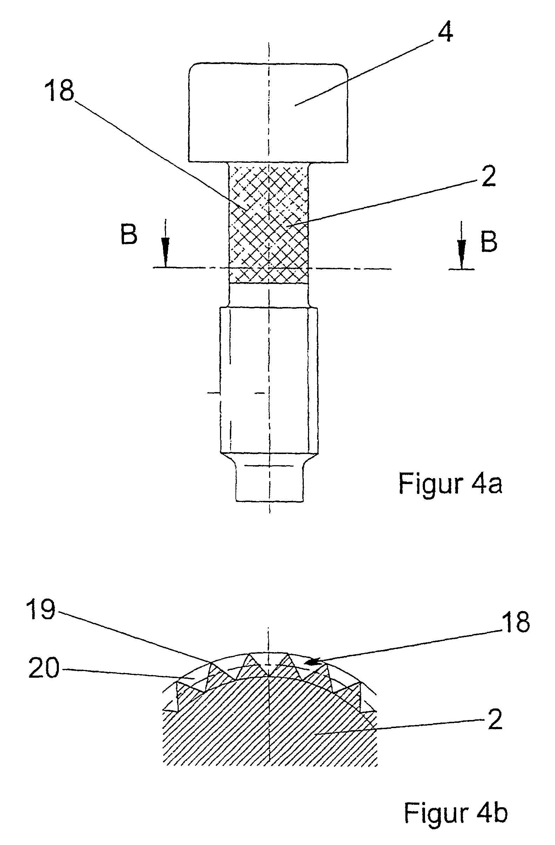

In den Figuren 4a und b ist eine mögliche Ausführungsform einer Schraubenrändelung 18 im Schaftbereich 2 der Befestigungsschraube 3 dargestellt. Diese in den Figuren 4a und 4b als Kreuzrändelung dargestellte Schraubenrändelung 18 dient dazu, der im Schaftbereich 2 aufgebrachten Kunststoffummantelung einen verbesserten Halt zu geben. Zur Verdeutlichung der Schraubenrändelung ist in den Figuren 4a und 4b die Kunststoffummantelung nicht dargestellt.

Insbesondere aus Figur 4b wird deutlich, daß die Schraubenrändelung 18 um den Schaftbereich 4 umlaufend eine zickzackförmige Gestalt mit nach außen vorstehenden Spitzen 19 und zwischen den Spitzen 19 angeordneten Vertiefungen 20 aufweist. Sowohl die Spitzen 19 als auch die Vertiefungen 20 sind in einem Winkel von vorzugsweise 45° zur Schraubenlängsachse angeordnet. Die im Schaftbereich 4 aufgebrachte Kunststoffummantelung ist so bemessen, daß sie die Vertiefungen 20 zwischen den Spitzen 19 vollständig ausfüllt und radial an der Außenfläche des Schaftbereiches eine genügende Schichtdicke zum Einbringen des Vormontagegewindes vorhanden ist.

### Bezugszeichenliste:

- 1 -: Gewindebereich
- 2 -: Schaftbereich
- 3 -: Befestigungsschraube
- 4 -: Schraubenkopf
- 5 -: Vormontagegewinde
- 6 -: Gehäusebauteil
- 7 -: Befestigungsgewinde
- 8 -: Zwischenspalt
- 9 -: Schweißmutter
- 10 -: Bügel
- 11 -: Lasche
- 12 -: Aussparung
- 15 -: Schenkel
- 16 -: Schenkel
- 18 -: Schraubenrändelung
- 19 -: Spitze
- 20 -: Vertiefung

## Patentansprüche

1. Vorrichtung zur Festlegung einer ersten Baugruppe an einem zweiten Bauteil zur Verwendung insbesondere in der Kraftfahrzeugindustrie, die mindestens eine Befestigungsschraube (3), ein korrespondierendes erstes Vormontagegewinde (5) an der ersten Baugruppe, in welchem die Befestigungsschraube (3) nach der Vormontage festgelegt ist und ein Befestigungsgewinde (7) an der ersten Baugruppe oder dem zweiten Bauteil zur Fixierung der ersten Baugruppe an dem zweiten Bauteil mittels der Befestigungsschraube (3) aufweist, wobei die Befestigungsschraube (3) nach der Fixierung im zugehörigen Befestigungsgewinde (7) festgelegt ist und mindestens einen vorderen, am freien Schraubenschaftende angeordneten Gewindebereich (1) und einen zweiten, dem Schraubenkopf (4) benachbarten Bereich aufweist,
**dadurch gekennzeichnet, dass**
der dem Schraubenkopf (4) benachbarte Bereich mit einer Kunststoffummantelung versehen ist, in der ein sich erst bei Einschrauben der Befestigungsschraube (3) in das Vormontagegewinde (5) einarbeitendes, mit dem Vormontagegewinde (5) korrespondierendes Gewinde vorhanden ist.

2. Vorrichtung für die Festlegung einer ersten Baugruppe an einem zweiten Bauteil nach Anspruch 1, **dadurch gekennzeichnet, daß** die Kunststoffummantelung aus einem duktilen Werkstoff, vorzugsweise Polyethylen oder Polyurethan, hergestellt ist.

3. Vorrichtung für die Festlegung einer ersten Baugruppe an einem zweiten Bauteil nach einem der Ansprüche 1 oder 2, **dadurch gekennzeichnet, daß** die Länge des ersten zur Festlegung der Befestigungsschraube (3) dienenden Gewindebereiches (1) der Befestigungsschraube (3) so bemessen ist, daß dieser das im Rahmen der Vormontage zu durchquerende Vormontagegewinde (5) verläßt, bevor der Einschraubvorgang im Befestigungsgewinde (7) beginnt.

4. Vorrichtung für die Festlegung einer ersten Baugruppe an einem zweiten Bauteil nach einem der Ansprüche 1 bis 3, **dadurch gekennzeichnet, daß** radial zwischen Schraubenschaft (2) und Kunststoffummantelung der Befestigungsschraube (3) eine umlaufende Schraubenrändelung angeordnet ist.

5. Vorrichtung für die Festlegung einer ersten Baugruppe an einem zweiten Bauteil nach einem der Ansprüche 1 bis 3, **dadurch gekennzeichnet, daß** radial zwischen Schraubenschaft (2) und Kunststoffummantelung der Befestigungsschraube (3) eine Kreuzrändelung angeordnet ist.

## Claims

1. Device for fastening a first unit to a second component for use particularly in the automobile industry, which device comprises at least one mounting bolt (3), a corresponding first preassembly thread (5) on the first unit, in which thread the mounting bolt (3) is fastened after preassembly, and a mounting thread (7) on the first unit or the second component for fixing the first unit to the second component by means of the mounting bolt (3), wherein the mounting bolt (3) after fixing is fastened in the associated mounting thread and comprises at least one front threaded region (1), which is disposed at the free bolt shank end, and a second region adjacent to the bolt head (4),
**characterized in that**
the region adjacent to the bolt head (4) is provided with a plastics sheath, in which there is a thread, which works itself in only during screwing of the mounting bolt (3) into the preassembly thread (5) and which corresponds with the preassembly thread (5).

2. Device for fastening a first unit to a second component according to claim 1, **characterized in that** the plastics sheath is manufactured from a ductile material, preferably polyethylene or polyurethane.

3. Device for fastening a first unit to a second component according to one of claims 1 or 2, **characterized in that** the length of the first threaded region (1) of the mounting bolt (3) used to fasten the mounting bolt (3) is so dimensioned that said first threaded region leaves the preassembly thread (5), which is to be traversed during preassembly, before the start of the screwing-in operation in the mounting thread (7).

4. Device for fastening a first unit to a second component according to one of claims 1 to 3, **characterized in that** a peripheral bolt knurl is disposed radially between bolt shank (2) and plastics sheath of the mounting bolt (3).

5. Device for fastening a first unit to a second component according to one of claims 1 to 3, **characterized in that** an axial and circumferential knurl is disposed radially between bolt shank (2) and plastics sheath of the mounting bolt (3).

## Revendications

1. Dispositif pour le maintien d'un premier ensemble structurel contre un deuxième élément structurel pour un emploi en particulier dans l'industrie automobile, lequel comprend au moins une vis de fixation (3), un premier filetage de prémontage correspondant (5) sur le premier ensemble structurel, dans lequel la vis de fixation (3) est maintenue après le prémontage, et un filetage de fixation (7) sur le premier ensemble structurel ou sur le deuxième élément structurel pour l'immobilisation du premier ensemble structurel contre le deuxième élément structurel au moyen de la vis de fixation (3), la vis de fixation (3) étant maintenue dans le filetage de fixation associé (7) après l'immobilisation et comportant au moins une zone de filetage avant (1) disposée à l'extrémité libre de la tige de vis et une deuxième zone voisine de la tête de vis (4),
**caractérisé en ce que**
la zone voisine de la tête de vis (4) est pourvue d'un enrobage en matière plastique dans lequel se trouve un filetage correspondant au filetage de prémontage (5), ne s'engrenant dans le filetage de prémontage (5) que lors du vissage de la vis de fixation (3) .

2. Dispositif pour le maintien d'un premier ensemble structurel contre un second élément structurel selon la revendication 1, **caractérisé en ce que** l'enrobage en matière plastique est fabriqué à partir d'un matériau ductile, de préférence de polyéthylène ou de polyuréthane.

3. Dispositif pour le maintien d'un premier ensemble structurel contre un second élément structurel selon l'une des revendications 1 ou 2, **caractérisé en ce que** la longueur de la première zone de filetage (1) de la vis de fixation (3) servant au maintien de la vis de fixation (3) est déterminée de façon que celle-ci quitte le filetage de prémontage (5) à traverser dans le cadre du prémontage avant que l'opération de vissage dans le filetage de fixation (7) ne commence.

4. Dispositif pour le maintien d'un premier ensemble structurel contre un second élément structurel selon l'une des revendications 1 à 3, **caractérisé en ce qu'**un moletage périphérique de vis est disposé radialement entre la tige de vis (2) et l'enrobage en matière plastique de la vis de fixation (3).

5. Dispositif pour le maintien d'un premier ensemble structurel contre un second élément structurel selon l'une des revendications 1 à 3, **caractérisé en ce qu'**un moletage en croix est disposé radialement entre la tige de vis (2) et l'enrobage en matière plastique de la vis de fixation (3).
